# EUROPEAN PATENT SPECIFICATION

(11) **EP 0 827 801 B1**
(45) Date of publication and mention of the grant of the patent: **01.08.2001**
(21) Application number: 97306525.3
(22) Date of filing: 26.08.1997
(51) Int. Cl.: B23K 9/08, B23K 9/167

(54) **Welding torch**
Schweissbrenner
Torche à souder

(30) Priority: 06.09.1996 GB 9618696
(43) Date of publication of application: 11.03.1998
(73) Proprietor: ROLLS-ROYCE plc, London, SW1E 6AT (GB)
(72) Inventor: Pratt, Anthony Lionel, Pucklechurch, Bristol BS17 3RW (GB)
(74) Representative: Bird, Vivian John

(56) References cited:
- US-A- 3 825 712
- US-A- 4 336 441
- PATENT ABSTRACTS OF JAPAN vol. 008, no. 022 (M-272), 31 January 1984 & JP 58 181472 A (NIPPON KOKAN KK), 24 October 1983,
- PATENT ABSTRACTS OF JAPAN vol. 012, no. 490 (M-779), 21 December 1988 & JP 63 212074 A (TOSHIBA CORP), 5 September 1988,

## Description

The invention concerns a welding torch. In particular the invention relates to a welding torch including an electromagnetic probe which when energised will cause deflection of the welding arc.

The invention finds particular application in carrying out a method known as free-shape welding which is described in US Patent No 5233150 (equivalent published European Patent Application EP-A-4961810). Apparatus for carrying out the method is also described therein. Another apparatus and method for forming a metal article on a worktable by a welding head is described in published International Patent Application WO 90/15375. Reference is directed to these publications for an understanding of the basic and common features of both method and apparatus of the kind with which the invention is concerned.

The welding torch described in both the aforementioned publications is of the metal inert gas kind, commonly referred to by the acronym MIG. In welding torches of this kind, during operation, an arc is maintained between the tip of a consumable wire electrode and the work. The wire electrode is passed through a copper contact tube, connected to a welding power supply unit, which lies along the axis of a ceramic gas nozzle through which the inert gas is flowed to provide a gas shield surrounding the weld pool. The wire although consumed in the process acts as an electrode for the welding arc and carries the full welding current. Therefore, it has to be a good conductor of electricity, and is not suitable for depositing all materials. For example, MIG welding is not suitable for depositing titanium.

Accordingly, in order to overcome this drawback it is proposed to employ an alternative type of welding torch known as tungsten inert gas, or TIG from its initial letters. In this kind of torch the arc is struck between a non-consumable tungsten electrode and the workpiece while a supply of filler material is fed into the arc. Conventionally the tungsten electrode of a TIG torch is held in a vertical orientation above the weld pool and the filler material, usually in rod or wire form, is presented at an oblique angle to the vertical. When the TIG torch is in motion relative to the work, as is the case in free-shape welding, the filler rod is preferably fed into the arc from the front, that is the direction of the rod is reciprocal to the direction of travel. However, in the context of the dynamics of a free-shape welding system the need to maintain a fixed orientation of the filler rod with respect to the direction of motion of the TIG weld torch occupies one axis of rotation of the torch support and control system. This restriction would not apply if the direction of filler feed is central ie along the vertical axis as in a MIG torch, where the angular orientation of the torch about the vertical axis is inconsequential. Therefore, a primary objective of the present invention is to avoid the orientation restriction inherent in a TIG welding torch by providing a TIG torch with, in effect, a feed of filler material into the weld pool in a central, axial direction.

It is known that a welding arc may be manipulated by a magnetic field from US Patent No 4336441 and in US Patent No 3825712. Both are aimed at improving the quality of a TIG (tungsten inert gas) weld by deflecting the welding arc of TIG welding torch relative to a fixed direction of travel in order to improve weld quality.

Accordingly the present invention consists of a welding torch comprising a first electrode , second electrode spaced a short distance from the first electrode, weld filler supply means, means to bias the first electrode to strike an arc to a workpiece and means to bias the second electrode to produce a magnetic field between first electrode and second electrode to deflect the arc towards the second electrode characterised in that the weld filler supply means is arranged to feed a filler material into the deflected arc in a substantially vertical downward direction between the first electrode and second electrode.
The invention and how it may be carried into practice will now be described in greater detail with reference to the accompanying drawing, by way of example, in which:
Figure 1 shows an arrangement according to the invention using a conventional TIG welding torch, and
Figure 2 shows a modified form of TIG welding torch.

Welding process technology is being developed for the production of near nett shapes by the deposition of weld metal. The welding torch is carried by a multi-axis robot guided by a control system which, essentially, is programmed to follow the shape of the object to be built-up. For several reasons a TIG welding process is preferred for the variety and composition of weld filler material which can be deposited and for the control of the rate of deposition available. However, the conventional wire feeding arrangements in which the arc electrode is ideally held pointing vertically, downwards and a rod or wire of filler material is fed into the arc from a lateral direction, is not well suited for the deposition of complex shapes. With these known arrangements the filler material has to be fed into the weld pool from the front, that is from the relative forward movement. As a result one of the axis of robot movement has to be devoted exclusively to maintaining this orientation of the means supplying the filler material.

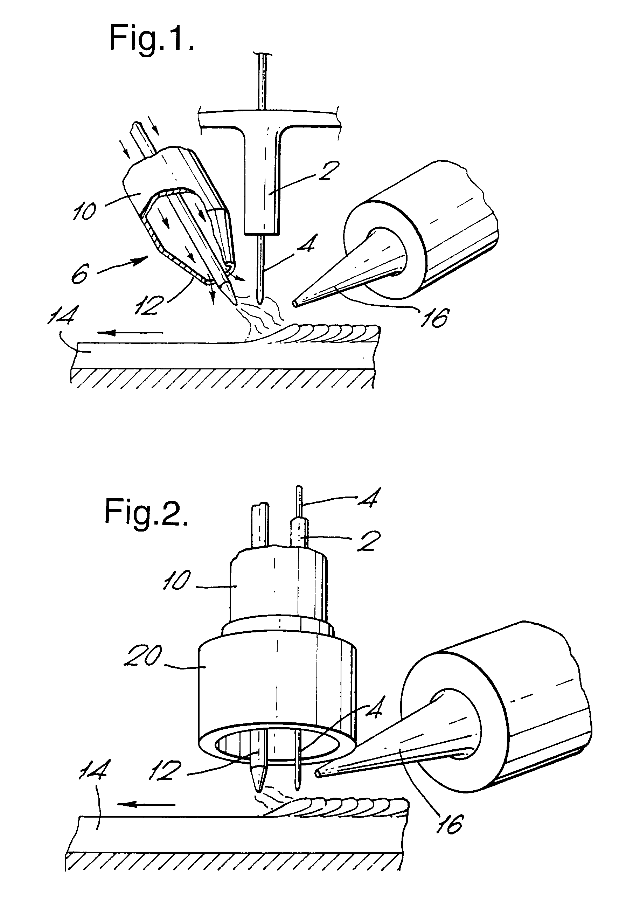

An alternative filler wire or rod feed arrangement is shown in Figure 1. A weld filler supply means in the form of a wire feed guide 2 was disposed in a vertical direction to feed a wire 4 in a vertically, downward direction. The TIG torch, indicated generally at 6, was positioned ahead of the molten weld pool 8. This was a conventional TIG torch comprising a gas torch nozzle 10 and a concentric tungsten electrode 12 which projected a short distance beyond the end of the nozzle.

In use: the nozzle 10 was connected to a source of the inert gas argon which was directed by the nozzle to form a gas shield around the electrode 12; and the electrode 12 was connected to a voltage source (not shown) to produce an arc, between the tip of the electrode and a workpiece 14, shrouded by the inert gas shield. An electromagnetic probe 16, also connected to a voltage source (not shown) was located in close proximity to the tungsten electrode 12 in order to deflect the arc onto the adjacent filler wire 4. The welding arc current was established at 120A in a voltage range of 11-12 volts. With a supply of stainless steel filler wire positioned alongside the tungsten electrode at a distance of 10mm satisfactory melting was achieved with arc deflections up to 10mm using a magnetic field strength of 17 gauss. Greater arc deflection could be achieved by increasing the arc length but it was necessary to confine the arc within the gas shield otherwise the welding process became unstable.

It was found that if the separation distance between the filler wire and the tungsten electrode was reduced to about 5mm less arc deflection was required and a magnetic field strength of about 130 gauss sufficed. Also, because the extent of arc deflection was reduced it was also possible to reduce the arc voltage. This produced some benefit in the consistency and a narrower weld profile of the deposited metal.

Figure 2 shows a second embodiment of a welding torch including a modified shielding gas shroud. In comparison with the torch arrangement of Figure 1 like parts carry like reference numerals. Thus, the gas nozzle 10 was again arranged co-axially with welding electrode 12. However, a short cylindrical shroud or skirt 20 was fitted over the end of the nozzle 10, and in use the lower rim of this shroud was located a short distance above the weld pool. The nozzle exhausted argon gas into the interior of the shroud to provide a more stable gas shield. The flow of gas escaped under the lower lip of the shroud 20 and was continuously replenished via the nozzle 10.

The welding electrode 12 extended in a vertically downward direction within the volume enclosed by the shroud 20 and the filler supply means 2 was arranged to feed the wire 4 in a parallel direction alongside the welding electrode 12. The electromagnetic probe 16 was again arranged adjacent to the torch with the tip of the probe under, but not touching, the lower rim of the shroud 20. In operation the modified torch was connected to electrical voltage and current sources and a source of inert gas as before and functioned in the same way as previously described.

It will be appreciated that a variety of forms of filler material may be utilised. Mention was made above of stainless steel as weld filler material but it will be understood that many other suitable materials may be used as required by the specification of the final object. For example, for some applications in which the object may be subject to high temperature a nickel alloy may be specified. The filler material may be supplied in the form of continuous wire of in rod form, a flux cored wire, or in powder form in which case the filler material supply means is adapted to meter a flow of the powder into the weld arc.

## Claims

1. A welding torch comprising a first electrode (12), second electrode (16) spaced a short distance from the first electrode (12), weld filler supply means (2), means to bias the first electrode (12) to strike an arc to a workpiece (14) and means to bias the second electrode (16) to produce a magnetic field between first electrode (12) and second electrode (16) to deflect the arc towards the second electrode (16) characterised in that the weld filler supply means (2) is arranged to feed a filler material (4) into the deflected arc in a substantially vertical downward direction between the first electrode (12) and second electrode (16).

2. A welding torch as claimed in claim 1 wherein the weld filler material (4) is in the form of a wire.

3. A welding torch as claimed in claim 1 wherein the weld filler material (4) is in powder form.

4. A welding torch as claimed in any preceding claim wherein the torch is of the kind used for tungsten inert gas (TIG) welding wherein the first electrode (12) is surrounded by a shield of inert gas.

5. A welding torch as claimed in claim 4 including a nozzle means (10) for connection to a supply of inert gas, the nozzle being disposed to co-extend with the first electrode (12).

6. A welding torch as claimed in claim 5 wherein the weld filler material supply means (2) is disposed to co-extend with the first electrode (12) and the nozzle (10).

7. A welding torch as claimed in any preceding claim wherein the second electrode (16) is disposed such that the tip of the electrode (16) intrudes into the gas shield.

8. A welding torch as claimed in any preceding claim wherein the weld filler material supply means (2) defines an axis about which the first electrode (12) and second electrode (16) may be rotated on opposite ends of a diameter.

## Patentansprüche

1. Schweißbrenner mit einer ersten Elektrode (12), einer zweiten Elektrode (16), die um einen kurzen Abstand von der ersten Elektrode (12) beabstandet ist, Schweißmaterialzufuhrmitteln (2), Mitteln zum Vorspannen der ersten Elektrode (12) zum Ziehen eines Lichtbogens zu einem Werkstück (14), und Mitteln zum Vorspannen der zweiten Elektrode (16) zum Erzeugen eines Magnetfelds zwischen der ersten Elektrode (12) und der zweiten Elektrode (16) zum Ablenken des Lichtbogens zur zweiten Elektrode (16) hin, dadurch gekennzeichnet, daß die Schweißmaterialzufuhrmittel (2) so angeordnet sind, daß sie ein Schweißmaterial (4) in den abgelenkten Lichtbogen in im wesentlichen vertikal abwärts verlaufender Richtung zwischen der ersten Elektrode (12) und der zweiten Elektrode (16) zuführen.

2. Schweißbrenner nach Anspruch 1, wobei das Schweißmaterial (4) in Form eines Drahts vorliegt.

3. Schweißbrenner nach Anspruch 1, wobei das Schweißmaterial (4) in Pulverform vorliegt.

4. Schweißbrenner nach einem der vorhergehenden Ansprüche, wobei der Brenner der zum Wolfram-Inertgasschweißen (TIG) verwendeten Art angehört, wobei die erste Elektrode (12) durch einen Inertgasschild umschlossen ist.

5. Schweißbrenner nach Anspruch 4, mit einer Düse (10) zur Verbindung mit einer Inertgaszufuhr, wobei die Düse so ausgelegt ist, daß sie sich mit der ersten Elektrode (12) gemeinsam erstreckt.

6. Schweißbrenner nach Anspruch 5, wobei die Schweißmaterialzufuhrmittel (2) so ausgelegt sind, daß sie sich mit der ersten Elektrode (12) und der Düse (10) gemeinsam erstrecken.

7. Schweißbrenner nach einem der vorhergehenden Ansprüche, wobei die zweite Elektrode (16) so angeordnet ist, daß die Spitze der Elektrode (16) in den Gasschild hineinragt.

8. Schweißbrenner nach einem der vorhergehenden Ansprüche, wobei die Schweißmaterialzufuhrmittel (2) eine Achse definieren, um welche die erste Elektrode (12) und die zweite Elektrode (16) auf entgegengesetzten Enden eines Durchmessers gedreht werden können.

## Revendications

1. Torche à souder comprenant une première électrode (12), une seconde électrode (16) espacée d'une courte distance de la première électrode (12), des moyens d'alimentation en matériau d'apport de soudure (2), des moyens pour polariser la première électrode (12) afin d'amorcer un arc vers une pièce (14) et des moyens pour polariser la seconde électrode (16) afin de produire un champ magnétique entre la première électrode (12) et la seconde électrode (16) afin de défléchir l'arc vers la seconde électrode (16), caractérisée en ce que les moyens d'alimentation en matériau d'apport de soudure (2) sont agencés afin d'amener un matériau d'apport (4) dans l'arc défléchi dans une direction sensiblement verticale vers le bas entre la première électrode (12) et la seconde électrode (16).

2. Torche à souder selon la revendication 1, dans laquelle le matériau d'apport de soudure (4) est sous forme de fil.

3. Torche à souder selon la revendication 1, dans laquelle le matériau d'apport de soudure (4) est sous forme de poudre.

4. Torche à souder selon l'une quelconque des revendications précédentes, dans laquelle la torche est du type utilisé pour le soudage au tungstène sous gaz inerte (TIG) dans lequel la première électrode (12) est entourée d'un écran de gaz inerte.

5. Torche à souder selon la revendication 4, comprenant des moyens formant une buse (10) pour la connexion à une alimentation en gaz inerte, la buse étant disposée de manière à s'étendre de manière coaxiale avec la première électrode (12).

6. Torche à souder selon la revendication 5, dans laquelle les moyens d'alimentation en matériau d'apport de soudure (2) sont disposés de manière coaxiale avec la première électrode (12) et la buse (10).

7. Torche à souder selon l'une quelconque des revendications précédentes, dans laquelle la seconde électrode (16) est disposée de sorte que le bout de l'électrode (16) pénètre dans l'écran de gaz.

8. Torche à souder selon l'une quelconque des revendications précédentes, dans laquelle les moyens d'alimentation en matériau d'apport de soudure (2) définissent un axe autour duquel on peut faire tourner la première électrode (12) et la seconde électrode (16) aux extrémités opposées d'un diamètre.
